# EUROPÄISCHE PATENTSCHRIFT

(11) **EP 2 932 337 B1**
(45) Veröffentlichungstag und Bekanntmachung des Hinweises auf die Patenterteilung: **09.06.2021**
(21) Anmeldenummer: 13802938.4
(22) Anmeldetag: 09.12.2013
(51) Int. Cl.: G05B 19/042

(54) **GERÄTEANORDNUNG UND VERFAHREN ZUR ERMITTLUNG EINER REINIGUNGSANWEISUNG EINES HAUSGERÄTES MIT EINEM, MIT DEM HAUSGERÄT IN VERBINDUNG STEHENDEN, MOBILEN ENDGERÄT**
DEVICE ARRANGEMENT AND METHOD FOR DETERMINING CLEANING INSTRUCTIONS FOR A DOMESTIC APPLIANCE, USING A MOBILE DEVICE THAT IS CONNECTED TO THE DOMESTIC APPLIANCE
ENSEMBLE APPAREIL ET PROCÉDÉ DE DÉTERMINATION D'UNE INSTRUCTION DE NETTOYAGE D'UN APPAREIL MÉNAGER AU MOYEN D'UN TERMINAL MOBILE CONNECTÉ À L'APPAREIL MÉNAGER

(30) Priorität: 14.12.2012 DE 102012223243
(43) Veröffentlichungstag der Anmeldung: 21.10.2015
(73) Patentinhaber: BSH Hausgeräte GmbH, 81739 München (DE)
(72) Erfinder: HÄPP, Claudia, 80639 München (DE); HÖLLER, Hannes, 83071 Stephanskirchen (DE); LINDER, Markus, 82362 Weilheim (DE); ROGENHOFER, Hans, 83607 Holzkirchen (DE); WIEFEL, Marc, 85521 Ottobrunn (DE)
(86) Internationale Anmeldenummer: PCT/EP2013/075926
(87) Internationale Veröffentlichungsnummer: WO 2014/090732

(56) Entgegenhaltungen:
- WO-A2-2011/145873
- US-A1- 2009 237 546

## Beschreibung

Die Erfindung betrifft eine Geräteanordnung zur Ermittlung einer Reinigungsanweisung eines Hausgerätes. Im Wesentlichen soll dazu ein mit dem Hausgerät in Verbindung stehendes, mobiles Endgerät herangezogen werden.

Ferner betrifft die Erfindung ein Verfahren zur Ermittlung einer Reinigungsanweisung für ein Hausgerät.

Als Hausgerät im Sinne der Erfindung ist grundsätzlich jedes elektrisch betriebene Gerät in einem Haushalt zu verstehen, das Personen eines Haushaltes einen Zusatznutzen bietet. Ein Hausgerät ist also im Allgemeinen dafür vorgesehen, Gegenstände bzw. Behandlungsgut, wie Wäsche, Geschirr, Nahrungsmittel und dergleichen zu behandeln. Das Hausgerät kann ein Haushaltsgroßgerät, wie beispielsweise eine Waschmaschine, ein Wäschetrockner, ein Waschtrockner, eine Geschirrspülmaschine, ein Gargerät, eine Dunstabzugshaube, ein Kältegerät, eine Kühl-Gefrierkombination oder ein Klimagerät sein. Das Hausgerät kann jedoch auch ein Haushaltskleingerät, wie beispielsweise ein Kaffeevollautomat oder eine Küchenmaschine sein.

Der Betriebs- bzw. Programmablauf eines Hausgerätes erfolgt mittels einer elektrischen bzw. elektronischen Steuerung, wobei die Ablaufschritte von Bedingungen, wie Messwerten, Zeitabläufen, Eingaben einer Bedienungsperson und dgl. abhängen. Die in ihrem Kern im Sinne eines technischen Fortschritts nunmehr rechnerartig aufgebauten, elektronischen Programmablaufsteuerungen lassen es zu, dass die Hausgeräte auf eine Eingabe der Bedienungsperson hin sehr flexibel betrieben werden können. Dabei wurden auch schon Hausgeräte geschaffen, die die zurückliegenden Behandlungsabläufe in geeigneter Form speichern können, um damit der Bedienungsperson Hinweise für einen Wartungsvorgang, wie eine Entkalkung, beispielsweise bei einem Kaffeevollautomaten zu geben.

Neben einer Wartung von Hausgeräten spielt die Beseitigung von Verschmutzungen in einem Hausgerät eine große Rolle. Dabei zeichnet sich das Phänomen ab, dass es derzeit noch nicht möglich erscheint, mit der Erfassung von zurückliegenden Betriebabläufen alleinig schon Verschmutzungen an einem Hausgerät vorhersehbar zu machen und Anweisungen zu geben, wie Verschmutzungen beseitigt werden könnten.

Unter Verschmutzungen im Sinne der Erfindung sind beispielsweise Reste von gemahlenen Kaffeebohnen an verschiedenen Stellen eines Kaffeevollautomaten zu verstehen. Bei einer Waschmaschine kann es sich um Waschmittelreste im Einspülfach der Waschmaschine handeln. Bei einem Gargerät, wie Backofen, können Partikel von Lebensmitteln an verschiedenen Stellen des Gerätes anhaften oder eingebrannt sein. Bei einem Kühlschrank können Lebensmittelreste an den Einschubteilen des Gerätes sich verfestigen. Manche Verschmutzungen fallen einer Bedienungsperson eines Hausgerätes gar nicht auf. Die Bedienungsperson eines Hausgerätes weiß oft nicht Bescheid, wie Verschmutzungen beseitigt werden können. Soweit bei Kauf des Hausgerätes möglicherweise Hinweise zur Beseitigung von Verschmutzungen durch eine Bedienanleitung des Hausgerätes gegeben wurden, ist es oftmals so, dass die Bedienanleitung nicht mehr zugänglich ist oder die Angaben sind der Bedienungsperson nicht ausreichend verständlich geworden.

Aus der DE 100 62 671 A1 geht eine Vorrichtung und ein Verfahren hervor, die im Gesamten dazu bestimmt sind, bei einem Hausgerät mit einer rechnerartigen Steuerung bzw. einem Rechner im Kern der Steuerung dieses Hausgerätes Informationen bzw. Daten bzw. Datensätze in die Steuerung einzulesen, so dass ein neuer Programmablauf erzielbar ist. Mit den neu eingelesen Datensätzen arbeit der Rechner des Hausgerätes sozusagen mit einer neuen, technischen Software für die Programmabläufe für den neu ausgerichteten, bestimmungsgemäßen Gebrauch des Hausgerätes. Als wesentliches Lösungsmittel dient dazu ein zum Hausgerät hinzukommendes, externes Gerät der Kommunikationstechnik, wie ein Mobiltelefon oder ein für die Mobilfunktechnik ausgerüsteter Computer, mit Hilfe dessen es einer Bedienungsperson ermöglicht wird, Daten bzw. Datensätze, die von einem Serverrechner eines Dienstanbieters über ein Mobilfunknetz empfangbar sind, über eine, insbesondere drahtlos ausgebildete, Schnittstelle zwischen dem externen Gerät und dem Hausgerät an die rechnerartige Steuerung dieses Hausgerätes zu übertragen.

Durch die DE 10 2010 040 032 A1 wird offenbart, wie ein externes Gerät in Bezug auf ein Hausgerät Nutzerprofile bzw. Nutzerprognosen, die das Hausgerät betreffen, zu generieren vermag. Zwischen dem Hausgerät und dem externen Gerät befindet sich eine Datenkommunikationsschnittstelle, wobei die Datenübertragung drahtlos bzw. drahtgebunden erfolgt. Das externe Gerät kann mit speziellen Anwendungsprogrammen ("App") ausgerüstet werden. Das externe Gerät ist auch durch eine einem Haushalt übergeordnete Einheit ersetzbar. Aus der US 2009/0237546 A1 ist ein Verfahren vorbekannt, das mit einem Mobiltelefon z.B. ein Bild eines tropfenden Wasserhahns aufnimmt, um dieses zu analysieren und dem Nutzer darauf basierend Wartungshinweise zu geben. Die WO 2011/145873 A2 wiederum beschreibt ein Hausgerät, das während des Betriebs Statusdaten an ein mobiles Endgerät überträgt, wobei ein Foto der zu waschenden Wäsche aufgenommen wird, um deren Zustand zu erkennen.

Nach Allem besteht die Aufgabe der Erfindung darin, unter Einsatz eines mobilen Endgerätes einer Bedienungsperson eines Hausgerätes vielfältige Möglichkeiten zu eröffnen, eine Verschmutzung eines Hausgerätes erfassbar zu machen, so dass eine Reinigungsanweisung gewinnbar ist. Diese Aufgabe wird durch die unabhängigen Ansprüche gelöst und durch die auf diese unabhängigen Ansprüche rückbezogen, abhängigen Ansprüche weitergebildet.

Die Erfindung betrifft also zunächst ein Hausgerät, das zur Datenübertragung mit einem mobilen, eine integrierte Kamera aufweisenden Endgerät verbindbar ist und das mit einer ersten rechnerartigen Steuerung zur Steuerung vom Betriebsabläufen des Hausgerätes, mit einem ersten Speicherteil mit einlesbaren Ablaufprogrammen, wobei erfolgte Betriebsabläufe bezüglich definierter Parameter laufend in einem zweiten Speicherteil gespeichert werden, wobei das mobile Endgerät mit der rechnerartigen Steuerung des Hausgerätes, über eine, insbesondere drahtlose, Schnittstelle verbunden ist, wobei ferner vorgesehen ist, dass das mobile Endgerät eine zweite rechnerartige Steuerung mit einem dritten Speicherteil für einen selbsttätigen Schmutzanalyseablauf aufweist, wobei ein willkürlich, insbesondere von einer Bedienperson, am mobilen Endgerät nach einer durch die Kamera erfassbarer Verschmutzung, ausgelöster Ablauf dazu bestimmt ist, die im zweiten Speicherteil der ersten rechnerartigen Steuerung des Hausgerätes abgespeicherten, definierten Parameter, zusammen mit dem Ergebnis der Schmutzerfassung zu analysieren, wobei über das mobile Endgerät, das für die Aufnahme einer Verbindung, insbesondere einer Funkverbindung , zu einem Server eines Dienstanbieters ausgelegt ist, eine Datenbank des Servers so abfragbar ist, dass zu erfassten Verschmutzungen des Hausgerätes am mobilen Endgerät eine Information zur Beseitigung der erfassten Verschmutzung anzeigbar ist.

Für die Erfindung ist es wichtig, dass der Verschmutzungsanalyseablauf weder alleine durch eine Aufnahme einer sichtbaren Verschmutzung noch weder alleine durch einen erfassten zurückliegender Betriebsablauf des Hausgerätes durchgeführt wird. Es wird vielmehr eine durch die Kamera des mobilen Endgerätes erfolgte Aufnahme der sichtbaren Verschmutzung mit dem Erfassen der zurückliegenden Betriebsabläufe des Hausgerätes mit bestimmten Parametern kombiniert bzw. korreliert und erst dann eine Datenbank im Internet abgefragt, um zu einer Reinigungsanweisung zu gelangen und diese anzeigbar zu machen. Es geht damit auch der Vorteil einher, dass auch für zunächst nicht sichtbare Verschmutzungen zugleich eine Reinigungsanweisung gegeben wird.

Wenn im Gebäude, in dem sich das Hausgerät befindet, bereits eine Internetverbindung vorliegt, ist es möglich, dass vom mobilen Endgerät eine Drahtlos- Verbindung zu einem Router im Gebäude aufgenommen wird, um so den Server des Dienstanbieters im Internet zu erreichen.

Falls eine solche Internetverbindung im Gebäude des Hausgerätes nicht besteht, wir vorgesehen, dass vom mobilen Endgerät über ein Funknetz eines Mobilfunkbetreibers auf Basis einer der Netze UMTS bzw. LTE/G3 eine Verbindung zu dem Server des Dienstanbieters aufgenommen wird.

Bei der Ausgestaltung der Erfindung ist vorgesehen, dass bei einem willkürlich am mobilen Endgerät in Bezug auf das Hausgerät ausgelöstem Ablauf sowohl Parameter des zweiten Speicherteils und Daten, die die Abbildung einer Verschmutzung betreffen mit zuordenbaren Daten der Datenbank des Servers, die in Bezug auf das Hausgerät gespeichert sind, mittels der zweiten rechnerartigen Steuerung, des mobilen Endgerätes, miteinander in Beziehung bringbar sind, um eine Information zur Beseitigung der erfassten Verschmutzung hervorbringbar zu machen bzw., insbesondere visuell, anzeigbar zu machen. Durch die besonders ausgebildete Datenbank ist es also möglich, das bezogen auf ein bestimmtes Hausgerät auch die Reinigungsanweisungen erhalten werden können, die zu der erfassten Verschmutzung unter Einbeziehung von zurückliegenden Betriebsabläufen mit bestimmten Parametern gehören.
Da stets mit neuen Erkenntnissen bei der Schmutzanalyse auszugehen ist, ist vorgesehen, dass das mobile Endgerät so ausgelegt ist, dass es neue Verschmutzungsanalyseprogramme, wie Apps, für ein bestimmtes Hausgerät bei Aufruf einer Internetseite in dessen dritten Speicherteil ladbar machen kann.

Dann ist es auch zweckmäßig, wenn das mobile Endgerät so ausgelegt ist, das bei neu geladenen Verschmutzungsanalyseprogrammen es veranlassbar ist, dass im Hausgerät in dessen zweiten Speicherteil andere Parameter speicherbar sind, so dass das neu geladene Verschmutzungsanalyseprogramm in Bezug auf einen willkürlich ausgelösten Analyseablauf eine höherwertigere Analyse erfassbarer Verschmutzungen des Hausgerätes vornehmbar machen lässt.

Da u. a. davon auszugehen ist, dass das mobile Endgerät speziell auf Hausgeräte ausgerichtet bzw. bestimmt ist, steht es an, dass die Kamera des mobilen Endgerätes für einen erweiterten Wellenlängenbereich einer Strahlung zur Abbildung von erfassbaren Verschmutzungen ausgelegt wird. Dazu könnte insbesondere der nahe Ultraviolettbereich von ca. 200 - 400 nm und / oder auch der nahe Infrarotbereich von ca. 800 - 1400 nm berücksichtigt werden. Gerade Verkrustungen in einem Backofen können unter Einbeziehung des nahen Infrarotbereiches so unschwer erkannt werden.

In einem solchen Fall steht es auch an, dass ein neues Verschmutzungsanalyseprogramme für den erweiterten Wellenlängenbereich einer Strahlung zur Abbildung der erfassbaren Verschmutzungen angepasst wird.

Obwohl die Verschmutzungsanalyse auf Basis der Aufnahme einer Verschmutzung und unter Berücksichtigung des zurückliegenden Betriebsablaufes des Hausgerätes schon zu hervorragenden Ergebnissen führt, kann es in Einzelfällen zweckmäßig sein, wenn eine Zusatzinformationen über die Verschmutzung über das mobile Endgerät eingegeben wird. In Fällen, bei denen der Bedienungsperson selbst ein Fehler unterlaufen ist, der zu einer entsprechenden Verschmutzung führt, könnte dies besonders vorteilhaft sein.

Obwohl gewöhnlich der Typ des Hausgerätes der Bedienungsperson bekannt ist und somit von ihr selbst über die Bedienoberfläche des mobilen Endgerätes eingegeben werden kann, ist es vorteilhaft, dass es auch über die Kamera des mobilen Endgerätes möglich ist, den Hausgerätetyp über eine Datenbankanfrage zu ermitteln. Dabei könnte es von Vorteil sein, wenn beispielweise das Energielabel des Hausgerätes zusammen mit Begrenzungsgeometriedaten des Hausgerätes zugrunde gelegt wird. Es wird hierzu auch auf die ältere Anmeldung der Anmelderin mit Aktenzeichen 2011 075 372.9 verwiesen.

Die erfindungsgemäße Aufgabe wird auch durch ein Verfahren zur Ermittlung einer Reinigungsanweisung für ein Hausgerät gelöst, wobei ein mobiles Endgerät mit eingebauter Kamera und ein Zugriff auf eine Datenbank eines Servers im Internet und folgende Verarbeitungsschritte- Schritte vorgesehen sind: mit der Kamera des mobilen Endgerätes wird eine Aufnahme der Verschmutzung gemacht und es werden daraus digitale Daten gewonnen, es werden definierte Parameter zurückliegender Betriebsabläufe des Hausgerätes von einer Steuerung des Hausgerätes an eine Steuerung des mobilen Endgerätes übertragen, die Steuerung des mobilen Endgerätes versendet unter Berücksichtigung der gewonnenen digitalen Daten über die Verschmutzung und den Parametern zurückliegender Betriebsabläufe eine Anfrage an die Datenbank des Servers im Internet, die Antwort der Anfrage an den Server wird auf einem Displayteil der Eingabeoberfläche des mobilen Endgerätes als Reinigungsanweisung angezeigt.

Soweit die Erfindung noch aufgrund der am Ende der folgenden Beschreibung der Ausführungsbeispiele aufgeführten Patentansprüche definiert wird, so soll es so sein, dass eine zunächst angegebene Kette von Rückbeziehungen von nicht selbständigen Ansprüchen in Bezug auf den jeweiligen übergeordneten, selbständigen Anspruch nicht als einschränkend in Bezug auf die insgesamt mitgeteilte Lehre anzusehen ist, soweit auch andere Kombinationen von Merkmalen sich als geeignet und ausführbar aus Sicht des Fachmanns ergeben.

Die Erfindung wird nachfolgend anhand von Ausführungsbeispielen im Einzelnen dargestellt.

Es zeigt:

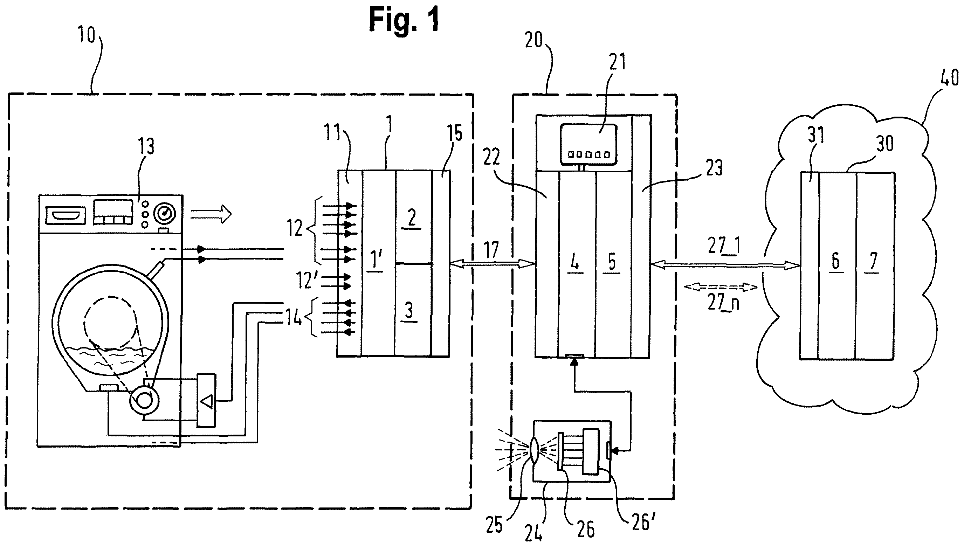

Fig. 1: ein schematisches Blockschaltbild einer wesentlichen Ausführungsform der Erfindung.

In Fig. 1 ist ein zur Erfindung gehörendes Hausgerät 10 als eine Waschmaschine dargestellt. Das Hausgerät 10 in der Ausbildung als Waschmaschine weist als Programmablaufsteuerung eine rechnerartige Steuerung 1 mit einem Zentralteil 1' auf. Zur besseren Übersicht ist die Steuerung 1 in Bezug eine schematische Seitenansicht der Waschmaschine getrennt dargestellt. Das Ablaufprogramm der Steuerung 1 ist in einem ersten Speicherteil 2 gespeichert. Dabei kann auch vorgesehen sein, dass das Ablaufprogramm bei dem Hausgerät auch an dessen Aufstellungsort geändert werden kann. Ferner weist die Steuerung 1 einen zweiten Speicherteil 3 auf, der dazu bestimmt ist, Messwerte bzw. definierte Betriebs- Parameter, die während eines Betriebsablaufes des Hausgerätes auftreten, und für eine Registrierung vorgesehen sind, in diesem zweiten Speicherteil 3 zu speichern. Es versteht sich von selbst, dass die bezeichneten Speicherteile, soweit sie bei Einschaltung des Hausgerätes 10 neu beschrieben werden, so ausgebildet sein müssen, dass bei einer Abschaltung des Energienetzes am Hausgerät deren Inhalt nicht verloren geht.

Die Steuerung 1 weist in Bezug auf die funktionswichtigen, elektrischen / elektronischen Bauteile einen Eingangs-/ Ausgangsport 11 auf. Als Eingänge bzw. Eingangssignale 12, meist schon in geeigneter Weise in digitaler Form aufbereitet, sind zunächst die eingestellten Programme, herrührend von einer Bedienblende 13 der Waschmaschine 10 zu berücksichtigen. Als Ausgänge 14 sind digitale Signale vorgesehen, die auf Aktoren (ohne Bezugszeichen) der Waschmaschine einwirken, z. B. einen Motor für die Drehbewegung einer Waschtrommel (ohne Bezugszeichen) oder für das Abpumpen von Waschlauge durch eine entsprechende Pumpe (ohne Bezugszeichen). Als weitere Eingangssignale 12 sind Messwerte bzw. auch Zeitmesswerte zu berücksichtigen, die dazu dienen, dass die Programmablaufsteuerung der Waschmaschine überhaupt in der Lage ist, ein bestimmtes Teilprogramm innerhalb eines ausgewählten Programms nachfolgend einem als abgeschlossenen anzusehenden Teilprogramm auslösen zu können. Beispielsweise soll sich ein Spülprogramm erst dann einem Hauptwaschprogramm anschließen, wenn die Waschlauge bei ausreichender Temperatur genügend lange auf die Wäsche unter Einsatz der vom Motor für die Trommel ausgelösten Bewegung in Bezug auf die Wäsche eingewirkt hat. Ferner können die Eingangssignale 12 auch dazu herangezogen werden, dass ein jeweils einzelner, Programmablauf in Bezug auf Werte, deren Erfassung in Bezug auf einen Programmablauf, also für die Folge von Teilprogrammen ohnehin zwingend vorliegend sind, möglichst weitgehend - insbesondere für die erfindungsgemäßen Parameter - registriert bzw. gespeichert werden. Diese Speicherung erfolgt in einem in Bezug auf die Steuerung 1 eingerichteten zweiten Speicherteil 3. Im Rahmen der Erfindung kann auch vorgesehen werden, dass nicht nur die Werte bzw. Parameter, die für die Abfolge von Teilprogrammen, die ein Gesamtprogramm bilden, als eine oder mehrere Eingangssignale 12 der Steuerung 1 zugeführt werden, sondern dass auch noch weitere Signale 12' hinzutreten können, die besonders geeignet sind, die Historie von Betriebabläufen treffend zu speichern und für einen bestimmungsgemäßen Ablauf von Programmen eine besonders hohe Bedeutung haben, insbesondere wenn diese gespeicherten, zurückliegenden Betriebsabläufe zu einer nachfolgenden Schmutzanalyse mit herangezogen werden.

Die rechnerartige Steuerung 1 des Hausgerätes 10 ist erfindungsgemäß nicht nur für die Ausführung von an der Bedienblende 13 des Hausgerätes ausgewählter Programme bestimmt, sondern ist auch so ausgelegt, dass eine Kommunikation mit einem mobilen Endgerät 20, wie einem Smartphone oder einem Tablet - PC möglich ist. Das in Rede stehende mobile Endgerät 20 kann jedoch auch ein ausschließlich für die Kommunikation mit Hausgeräten bestimmtes Gerät sein. Im Allgemeinen weist das mobile Endgerät 20 eine Eingabeoberfläche 21 auf, die sowohl für Eingabebefehle einer Bedienungsperson als auch für die Visualisierung von Abfragen in Bezug auf das mobile Endgerät 20 selbst oder in Bezug auf ein anderes in Kommunikation mit diesem Endgerät befindlichen Gerät, wie dem Hausgerät 10, steht. Ferner weist das mobile Endgerät 20 eine integrierte Kamera 24 auf. Diese Kamera 24 weist eine Linsenanordnung 25 auf, die eine Ausrichtung auf ein Objekt ermöglicht, das zur Abbildung in einer Bildebene der Kamera ansteht. Bei der Erfindung wird eine Verschmutzung an oder in einem Hausgerät aufgenommen. Ein Licht- bzw. Strahlungs- empfindlicher Chip 26, der sich in der Bildebene der Kamera befindet, ermöglicht die Gewinnung einer genügenden Anzahl von Pixeln, wie beispielsweise 2 Megabite, des Objektes oder der Verschmutzung. Über einen Umsetzer 26' werden die vom Chip 26 hervorgebrachten Pixel erfasst und es werden eine genügende Anzahl von digitale Bilddaten gewonnen, die einer nachfolgend noch weiter zu erläuternden Steuerung 4 zugeführt werden.

Das mobile Endgerät 20 verfügt im Übrigen über die Steuerung 4, die als zweite rechnerartige Steuerung 4 zu bezeichnen ist, die ferner einen dritten Speicherteil 5 aufweist. Der Speicherteil 5 kann Programme aufnehmen, die für eine Schmutzanalyse in Bezug auf das Hausgerät 10 geeignet sind. Es versteht sich von selbst, dass der Speicherteil 5, soweit eine Energieabschaltung des mobilen Enderätes auch vorgesehen ist, so ausgebildet sein muss, dass bei einer Abschaltung deren Speicherinhalt nicht verloren geht. Die benannten Programme für einen Verschmutzungsanalyse- Ablauf können auch als "Apps" bezeichnet werden. Es soll in Bezug auf das mobile Endgerät 20 vorgesehen sein, dass Apps für diverse Hausgeräte oder in einer aktualisierten Form über das Internet heruntergeladen werden können, wobei die Möglichkeit der Entrichtung von Lizenzgebühren vorgesehen sein kann. Es ist dazu ein Server bereitzustellen. Über das mobile Endgerät 20 ist dazu von der Bedienungsperson eine bestimmte Internetseite aufzurufen, die z. B. vom Hersteller der Hausgeräte bereitgestellt wird oder unter dessen Verantwortung bereitgestellt wird.

Die Steuerung 1 weist im Übrigen eine Schnittstelle 15 für eine, insbesondere drahtlose, Kommunikation 17 mit einem lokalen Netzwerk WLAN auf. Es können Funkstandards wie WiFi oder ZigBee berücksichtigt werden.

Zum andern weist das mobile Endgerät 20 eine geeignete Schnittstelle 22 auf, um mit der Steuerung 1 des Hausgerätes 10 über deren Schnittstelle 15 kommunizieren zu können. Es versteht sich von selbst, dass dabei eine bestimmte drahtlose Verbindung zugrunde gelegt wird, die derjenigen sowohl der Schnittstelle 15 als der Schnittstelle 22 entspricht.

Ferner ist vorgesehen, dass das mobile Endgerät 20 mindestens eine, bevorzugt eine Mobilfunk- Verbindung 27_1 mit beispielsweise einem Server 6 im Internet 40 aufnehmen kann. Es können bis n solcher Verbindungen 27_n aufgenommen werden, insbesondere wenn durch das mobile Endgerät 20 auch andere Server im Internet Zugriff haben soll.

Für diese Kommunikation weist das mobile Endgerät 20 eine weitere Schnittstelle 23 auf. Wenn vorgesehen ist, dass das mobile Endgerät 20 auf ein drahtloses lokales Netzwerk WLAN des Haushaltes in dem sich das Hausgerät befindet, zurückgreifen kann, dann ist auch die Schnittstelle 23 auf einen Funk- Standard ausgelegt, der zu diesem WLAN gehört. Die Verbindung zum Internet kann in einem solchen Fall nur dann hergestellt werden, wenn ein Router (in der Figur nicht eingezeichnet) im Haushalt, in dem das Hausgerät aufgestellt ist, vorhanden ist, der wiederum eine Anbindung (Schnittstelle) für dieses WLAN aufweist.

Die beschriebene Schnittstelle 23 kann auch für eine Anbindung an eine Funkzelle eines Mobilfunkbetreibers ausgelegt sein. Solche Funknetze, die einen ausreichend schnellen Datenaustausch mit entsprechender Datenbreite zulassen, sind Netze nach dem Standard UMTS oder LTE/3G. Mittels des Mobilfunknetzes ist eine Verbindung 27 mit dem Internet möglich, zum Beispiel über ein VPN (Virtual Private Network). Über eine Verbindung, wie die mit 27_1 bezeichnete Verbindung, kann dann jeder Server im Internet, erreicht werden, wobei eine, einem Übertragungsprotokoll entsprechende, Adresse zugrunde gelegt wird.

Obige Gerätezuordnung vorausgesetzt, kann eine Bedienungsperson eines Hausgerätes 10, die sich in irgend einer Weise nicht sicher ist, ob oder wie Verschmutzungen des Hausgerätes 10 zu beseitigen sind, jederzeit - insbesondere wenn das Hausgerät 10 einen Betriebsablauf abgeschlossen hat - einen Verschmutzungstest des Hausgerätes 10 auslösen und zwar über eine Eingabeoberfläche 21 des mobilen Endgerätes 20 wobei über die eingebaute Kamera 24 des mobilen Endgerätes 20 eine Aufnahme der sichtbaren Verschmutzung des Hausgerätes 10 zu machen ist. Bei einem solchen Verschmutzungstestablauf wird dann unter Abarbeitung des im dritten Speicherteil 5 des mobilen Endgerätes 20 gespeicherten Verschmutzungsanalyse- Programms bzw. Apps über die Verbindung 17 auf den zweiten Speicherteil 3 der Steuerung 1 zurückgegriffen um gespeicherte Daten bzw. definierte Parameter der zurückliegenden Betriebsabläufe zu übernehmen. Es werden daraus kombinierte Datensätze unter Einbeziehung der Bilddaten über die erfasste Verschmutzung gebildet, die für einen Vergleich mit einer Datenbank heranziehbar sind. Erfindungsgemäß wird auf eine Datenbank 7 bzw. auf einen vierten Speicherbereich eines Servers 6 bzw. Rechners eines Dienstanbieters im Internet 40 zurückgegriffen. Dort sind kombinierte Datensätze gespeichert, die berücksichtigen, wie eine durch eine Aufnahme einer Verschmutzung im Hausgerät erfasste Verschmutzung unter Berücksichtigung zurückliegender Betriebsabläufe mit definierten Parametern im Hausgerät zu einer Anweisung zur Reinigung der Verschmutzung zu führen vermögen. Die Einrichtungen des Dienstanbieters werden insgesamt mit 30 bezeichnet und sind über eine Schnittstelle 31 mit dem Internet 40 verbunden. Diese Datenbank 7 kann von einem bestimmten Dienstanbieter betrieben werden. Dieser Dienstanbieter kann der Hersteller der Hausgeräte selbst sein. Es kann jedoch auch eine vertragliche Beziehung, wie eine Lizenzvereinbarung, zwischen dem Hersteller der Hausgeräte und dem Dienstanbieter bestehen, zumal diese Daten im Allgemeinen durch eine besondere Leistung des Herstellers der Hausgeräte geschaffen werden.

Die Bedienungsperson kann so eine Rückmeldung auf dem Displayteil der Eingabeoberfläche 21 des mobilen Endgerätes 20 dergestalt bekommen, wie eine erfasste Verschmutzung eines Hausgerätes 10 unter Berücksichtigung zurückliegender Betriebsabläufe sich beseitigen lässt. Es wird dabei davon ausgegangen, dass die Bedienungsperson mithilfe der Anweisung in den allermeisten Fällen die Verschmutzung selbst beseitigen kann. Nur in absoluten Ausnahmefällen müsste ein Servicedienst beauftragt werden. So ist es möglich, wenn die Bedienungsperson erkennt, dass eine Reinigung in Selbstausführung nicht möglich ist oder dies ermittelt wird, dass dann automatisch ein Kundendienst beauftragt wird. Die App ist an diese Strategie dann in geeigneter Weise angepasst.

Im Ergebnis kann eine Bedienungsperson durch eine Rückmeldung über den Displayteil von 21 zu einer Reinigungsanweisung des infrage stehenden Hausgerätes gelangen.

Obwohl es bereits nach der Erfindung sich als sehr erfolgreich bestätigt hat, dass die Aufnahme der Verschmutzung mit den Parametern der zurückliegenden Betriebsabläufe zu kombinierten Datensätzen verbunden werden und so durch Abfrage der Datenbank 7 im Internet 40 zuverlässig eine Reinigungsanweisung für die Verschmutzung des Hausgerätes ermittelbar ist, so hat es sich noch gezeigt, das die Treffsicherheit zur Gewinnung der Reinigungsanweisung noch erhöht werden kann, wenn besondere Vorkehrungen bei der Aufnahme der Verschmutzung gemacht werden. Beispielweise ist es möglich, für die Aufnahmetechnik der Verschmutzung einen über den Spektralbereich des sichtbaren Lichtes hinausgehenden Frequenz- bzw. Wellenlängenbereich, entsprechend dem nahen Ultraviolettbereich (200- 400 nm) bzw. nahen Infrarotbereich (800 - 1400 nm), Bereich einzusetzen, indem entsprechend dafür geeignete Aufnahmechips 26 und geeignete Linsensysteme 25, gegebenenfalls mit Quarzglas, in der Kamera 24 des mobilen Endgerätes 20 eingesetzt werden. Damit lässt sich eine Reinigungsanweisung für eine Verschmutzung unter Berücksichtigung der zurückliegenden Betriebsabläufe noch besser ermitteln. Dabei versteht es sich von selbst, dass auch die Datenbank des 7 Dienstanbieters auf diese genauer ermittelte Verschmutzung ausgerichtet sein muss.

Es ist auch möglich, dass die Daten der Datenbank 7 durch neue Erkenntnisse über die Verschmutzung und deren Beseitigung bei einem einzelne Hausgerät 10 aktualisiert werden können, wobei gegebenenfalls ein Administrator des Dienstanbieters unterstützend tätig werden kann.

Ferner steht es auch an, dass zusätzlich zu der Aufnahme der Verschmutzung individuelle Eindrücke der Bedienungsperson über die Verschmutzung über den Eingabeteil 21 des mobilen Endgerätes 20 in Alphanumerischer Weise als Zusatzinformation eingegeben werden. Dabei versteht es sich von selbst, dass auch die Datenbank 7 des Dienstanbieters auf diese Angaben über die Verschmutzung ausgerichtet sein muss.

Bei der Anwendung der Erfindung darf im Allgemeinen davon ausgegangen werden, dass der Typ des Hausgerätes, bei dem die Verschmutzung ermittelt wird, bekannt ist. Dies kann durch die Übertragung der zurückliegenden Betriebsabläufe mit der Verbindung 17 an das mobile Endgerät 20 mit erfolgen. Ferner ist es möglich, dass die Angabe über den Typ des Hausgerätes über den Eingabeteil 21 des mobilen Endgerätes 20 eingegeben wird. Des Weiteren ist es möglich, über die Kamera 24 des mobilen Endgerätes 20 das Hausgerät bzw. typische Konturen des Hausgerätes, insbesondere auch in Verbindung mit einem Energielabel, zu erfassen und damit den Hausgerätetyp in einer vorbereitenden Phase vor der eigentlichen Schmutzanalyse mithilfe der Datenbank 7 des Dienstanbieters zu ermitteln. Es wird dazu auch auf die ältere Anmeldung der Anmelderin, vgl. das amtliche Aktenzeichen 10 2011 075 372.9 verwiesen.

Obwohl voran stehend nur anhand eines Hausgerätes, wie Waschmaschine das Zusammenwirken von Geräten der Erfindung erläutert wurde, ist davon auszugehen, dass für jedes Hausgerät 10 im Sinne der Erfindung Vorteile durch die Anwendung, insbesondere des mobilen Endgerätes 20 mit integrierter Kamera 24 im Zusammenhang mit dem zugehörigen Hausgerät einer bestimmten Ausbildung einhergehen. Wie bereits dargelegt, können die Schmutzanalyseprogramme bzw. die Apps über das Internet auf das mobile Endgerät 20 - und zwar stets in einer aktualisierten Form - geladen werden. Dabei ist auch vorsehbar, dass über das Schmutzanalyseprogramm bzw. die Apps auf das Hausgerät 10 zurückgewirkt werden kann, indem die Art der Messwerte bzw. der definierten Parameter, die beim Betrieb des jeweiligen Hausgerätes 10 für die Testabläufe im Speicherteil 3 gespeichert werden, ergänzend oder geändert bestimmt werden können, um die Schmutzanalyseabläufe noch geeigneter durchführen zu können, wenn dies aufgrund neuer Erkenntnisse beim Hersteller der Hausgeräte sich abzeichnen sollte. Die Möglichkeit der Abänderung von Betriebsabläufen durch aktualisierte Programme geht bereits durch die auf die Anmelderin zurückgehende DE 100 62 671 A1 hervor. Bezogen auf die vorliegende Geräteanordnung können also auch Daten bezüglich des Speicherteils 2 geändert oder ergänzt werden, wobei das Endgerät 20 auch für die Übertragung der aktualisierten Programme für Betriebsabläufe einsetzbar sein soll. Somit können also Verschmutzungsanalyseprogramme und Programme für den Betriebsablauf mit von zugehörigen Parametern in aktualisierter Weise in die Speicherteile 4, 3 bzw. 2 eingelesen werden.

### Bezugszeichenliste:

- 1: erste rechnerartige Steuerung
- 1': Zentralteil von 1
- 2: erster Speicherteil
- 3: zweiter Speicherteil
- 4: zweite rechnerartige Steuerung
- 5: dritter Speicherteil
- 6: Server, dritte rechnerartige Steuerung
- 7: Datenbank, vierter Speicherteil

- 10: Hausgerät
- 11: Eingangs-/ Ausgangsport
- 12: Eingangssignale
- 12': Eingangssignale ergänzend für Testabläufe
- 13: Bedienblende
- 14: Ausgänge für Aktoren
- 15: Schnittstelle
- 17: drahtlose Verbindung
- 20: mobiles Endgerät
- 21: Eingabeoberfläche mit Displayteil
- 22: Schnittstelle
- 23: Schnittstelle
- 24: Kamera, in 20 integriert
- 25: Linsenanordnung
- 26: Chip, Licht- bzw. Strahlungs- empfindlich
- 26': Umsetzer
- 27_1: Mobilfunk-Verbindung
- 27_n: nte Verbindung
- 30: Einrichtungen Dienstanbieter
- 31: Schnittstelle
- 40: Internet

## Patentansprüche

1. System aus einem Hausgerät (10) und einem eine integrierte Kamera (24) aufweisenden mobilen Endgerät, wobei das Hausgerät (10) zur Datenübertragung mit dem mobilen Endgerät (20) verbindbar ist und eine erste rechnerartige Steuerung (1) zur Steuerung von Betriebsabläufen des Hausgerätes (10) aufweist, wobei die erste rechnerartige Steuerung (1) mit einem ersten Speicherteil (2) mit einlesbaren Ablaufprogrammen und mit einem zweiten Speicherteil (3) ausgestattet ist und dazu bestimmt ist, dass beierfolgte Betriebsabläufe bezüglich definierter Parameter laufend in dem zweiten Speicherteil (3) gespeichert werden, wobei das mobile Endgerät (20) mit der rechnerartigen Steuerung (1) des Hausgerätes (10), über eine, insbesondere drahtlose, Schnittstelle (15) verbunden ist, wobei ferner vorgesehen ist, dass das mobile Endgerät (20) eine zweite rechnerartige Steuerung (4) mit einem dritten Speicherteil (5) für einen selbsttätigen Schmutzanalyseablauf aufweist, wobei ein willkürlich, insbesondere von einer Bedienperson, am mobilen Endgerät (20) nach einer durch die Kamera erfassbaren Verschmutzung des Hausgeräts, ausgelöster Ablauf dazu bestimmt ist, die im zweiten Speicherteil (3) der ersten rechnerartigen Steuerung (1) des Hausgerätes (10) abgespeicherten, definierten Parameter, zusammen mit dem Ergebnis der Schmutzerfassung zu analysieren, wobei über das mobile Endgerät (20), das für die Aufnahme einer Verbindung, insbesondere einer Funkverbindung (27_1), zu einem Server (6) eines Dienstanbieters ausgelegt ist, eine Datenbank (7) des Servers (6) so abfragbar ist, dass zu erfassten Verschmutzungen des Hausgerätes (10) am mobilen Endgerät eine Information zur Beseitigung der erfassten Verschmutzung des Hausgeräts anzeigbar (21) ist.

2. System nach Anspruch 1, wobei vom mobilen Endgerät (20) eine WLAN Verbindung zu einem Router im Gebäude des Hausgerätes (10) aufnehmbar ist, um den Server (6) des Dienstanbieters im Internet (40) erreichbar zu machen.

3. System nach Anspruch 1 wobei vom mobilen Endgerät (20) über ein Funknetz eines Mobilfunkbetreibers auf Basis einer der Netze UMTS bzw. LTE/G3 eine Verbindung zu dem Server (6) des Dienstanbieters aufnehmbar ist.

4. System nach einem der Ansprüche 1 bis 3, wobei bei einem willkürlich am mobilen Endgerät (20) in Bezug auf das Hausgerät (10) ausgelöstem Ablauf sowohl Parameter des zweiten Speicherteils (3) und Daten, die die Abbildung einer Verschmutzung des Hausgeräts betreffen mit zuordenbaren Daten der Datenbank (7) des Servers (6), die in Bezug auf das Hausgerät (10) gespeichert sind, mittels der zweiten rechnerartigen Steuerung (4), des mobilen Endgerätes (20), miteinander in Beziehung bringbar sind, um eine Information zur Beseitigung der erfassten Verschmutzung hervorbringbar zu machen bzw., insbesondere visuell (21), anzeigbar zu machen.

5. System nach einem der vorhergehenden Ansprüche, wobei das mobile Endgerät (20) so ausgelegt ist, dass es neue Verschmutzungsanalyseprogramme, wie Apps, für ein bestimmtes Hausgerät bei Aufruf einer Internetseite in dessen dritten Speicherteil (5) ladbar machen kann.

6. System nach Anspruch 5, wobei das mobile Endgerät (20) so ausgelegt ist, das bei neu geladenen Verschmutzungsanalyseprogramme es veranlassbar ist, dass im Hausgerät (10) in dessen zweiten Speicherteil (3) andere Parameter speicherbar sind, so dass das neu geladene Verschmutzungsanalyseprogramm in Bezug auf einen willkürlich ausgelösten Analyseablauf eine höherwertigere Analyse erfassbarer Verschmutzungen des Hausgerätes (10) vornehmbar machen lässt.

7. System nach einem der vorhergehenden Ansprüche, wobei die Kamera (24) des mobilen Endgerätes (20) für einen erweiterten Wellenlängenbereich einer Strahlung zur Abbildung von erfassbaren Verschmutzungen ausgelegbar ist.

8. System nach Anspruch 7, wobei ein neues Verschmutzungsanalyseprogramme für den erweiterten Wellenlängenbereich einer Strahlung zur Abbildung der erfassbaren Verschmutzungen anpassbar ist.

9. System nach einem der vorhergehenden Ansprüche, wobei Zusatzinformationen über die Verschmutzung über das mobile Endgerät eingegeben werden.

10. System nach einem der vorhergehenden Ansprüche, wobei der Typ des Hausgerätes über ein durch die Kamera (24) des mobilen Endgerätes gewinnbare Abbildung des Hausgerätes (10) ermittelbar ist oder eine Information über das Hausgerät über das mobile Endgerät eingegebbar ist.

11. Verfahren zur Ermittlung einer Reinigungsanweisung für ein Hausgerät (10), wobei ein mobiles Endgerät (20) mit eingebauter Kamera (24) und ein Zugriff auf eine Datenbank (7) eines Servers (6) im Internet (40) vorgesehen sind, wobei folgende Verarbeitungsschritte vorgesehen sind:
• mit der Kamera (24) des mobilen Endgerätes (20) wird eine Aufnahme einer Verschmutzung des Hausgeräts gemacht und es werden daraus digitale Daten gewonnen,
• eine Steuerung (4) des mobilen Endgerätes versendet unter Berücksichtigung der gewonnenen digitalen Daten über die Verschmutzung des Hausgeräts eine Anfrage an die Datenbank (7) des Servers (6) im Internet (40) und
• die Antwort der Anfrage an den Server (6) wird auf einem Displayteil der Eingabeoberfläche (21) des mobilen Endgerätes (20) als Reinigungsanweisung angezeigt,
wobei definierte Parameter zurückliegender Betriebsabläufe des Hausgerätes (10) von einer Steuerung (1) des Hausgerätes (10) an eine Steuerung (4) des mobilen Endgerätes (20) übertragen werden und die Steuerung (4) des mobilen Endgerätes die Anfrage unter Berücksichtigung der gewonnenen digitalen Daten über die Verschmutzung des Hausgeräts und den Parametern zurückliegender Betriebsabläufe versendet.

12. Verfahren zur Ermittlung einer Reinigungsanweisung für ein Hausgerät (10) nach Anspruch 11, wobei die Steuerung (4) des mobilen Endgerätes (20) ein Verschmutzungsanalyseprogramm speichert, mittels dessen die Verarbeitungsschritte durchführbar sind.

13. Verfahren nach Anspruch 12, wobei ein Verschmutzungsanalyseprogramm, insbesondere in aktualisierter Form, aus dem Internet (40) in die Steuerung (4) des mobilen Endgerätes (20) ladbar ist.

## Claims

1. System consisting of a household appliance (10) and a mobile terminal that has an integrated camera (24), wherein the household appliance (10) can be connected to the mobile terminal (20) for data transfer purposes and has a first computer-like controller (1) for controlling operating sequences of the household appliance (10), wherein the first computer-like controller (1) is equipped with a first memory part (2) with readable sequence programs and with a second memory part (3) and is designed such that operating sequences that have taken place with regard to defined parameters are stored in the second memory part (3) on an ongoing basis, wherein the mobile terminal (20) is connected to the computer-like controller (1) of the household appliance (10) via an, in particular wireless, interface (15), wherein it is further provided that the mobile terminal (20) has a second computer-like controller (4) with a third memory part (5) for an automatic contamination analysis sequence, wherein a sequence triggered at will, in particular by an operator, on the mobile terminal (20) following a contamination of the household appliance that can be detected by the camera is designed to analyse the defined parameter, which is saved in the second memory part (3) of the first computer-like controller (1) of the household appliance (10), together with the result of the contamination detection, wherein via the mobile terminal (20), which is configured for establishing a connection, in particular a wireless connection (27_1), to a server (6) of a service provider, a database (7) of the server (6) can be queried in such a way that it is possible to display (21) an item of information, regarding detected contaminations of the household appliance (10), on the mobile terminal in order to rectify the detected contamination of the household appliance.

2. System according to claim 1, wherein the mobile terminal (20) is able to establish a WLAN connection to a router in the building of the household appliance (10), in order to make it possible to reach the server (6) of the service provider on the Internet (40).

3. System according to claim 1, wherein the mobile terminal (20) is able to establish a connection to the server (6) of the service provider via a wireless network of a mobile network operator on the basis of one of the networks UMTS or LTE/G3.

4. System according to one of claims 1 to 3, wherein, in the case of a sequence triggered at will on the mobile terminal (20) in relation to the household appliance (10), both parameters of the second memory part (3) and data, which relates to the depiction of a contamination of the household appliance with assignable data of the database (7) of the server (6) which is stored in relation to the household appliance (10), can be related to one another by means of the second computer-like controller (4), of the mobile terminal (20), in order to make it possible to generate an item of information for rectifying the detected contamination or to make it possible to display it, in particular visually (21).

5. System according to one of the preceding claims, wherein the mobile terminal (20) is configured such that it can make it possible to load new contamination analysis programs, such as apps, for a particular household appliance when accessing an Internet page in its third memory part (5).

6. System according to claim 5, wherein the mobile terminal (20) is configured such that, in the event of newly loaded contamination analysis programs, it is possible to cause other parameters to be able to be stored in the household appliance (10), in the second memory part (3) thereof, so that the newly loaded contamination analysis program makes it possible to be able to carry out a superior analysis of detectable contaminations of the household appliance (10) in relation to an analysis sequence triggered at will.

7. System according to one of the preceding claims, wherein the camera (24) of the mobile terminal (20) can be configured for an extended wavelength range of a radiation for the depiction of detectable contaminations.

8. System according to claim 7, wherein a new contamination analysis program can be adapted for the extended wavelength range of a radiation for the depiction of the detectable contaminations.

9. System according to one of the preceding claims, wherein additional information regarding the contamination is entered via the mobile terminal.

10. System according to one of the preceding claims, wherein the type of household appliance can be ascertained via a depiction of the household appliance (10) that can be obtained by the camera (24) of the mobile terminal or an item of information regarding the household appliance can be entered via the mobile terminal.

11. Method for ascertaining a cleaning instruction for a household appliance (10), wherein a mobile terminal (20) with built-in camera (24) and access to a database (7) of a server (6) on the Internet (40) are provided, wherein the following processing steps are provided:
• the camera (24) of the mobile terminal (20) makes a recording of a contamination of the household appliance and digital data is obtained therefrom,
• a controller (4) of the mobile terminal sends a query to the database (7) of the server (6) on the Internet (40), taking into consideration the obtained digital data regarding the contamination of the household appliance, and
• the response to the query to the server (6) is displayed as a cleaning instruction on a display part of the input surface (21) of the mobile terminal (20),
wherein defined parameters of past operating sequences of the household appliance (10) are transferred from a controller (1) of the household appliance (10) to a controller (4) of the mobile terminal (20) and the controller (4) of the mobile terminal sends the query while taking into consideration the obtained digital data regarding the contamination of the household appliance and the parameters of past operating sequences.

12. Method for ascertaining a cleaning instruction for a household appliance (10) according to claim 11, wherein the controller (4) of the mobile terminal (20) stores a contamination analysis program, by means of which the processing steps can be performed.

13. Method according to claim 12, wherein a contamination analysis program, in particular in an updated form, can be loaded into the controller (4) of the mobile terminal (20) from the Internet (40).

## Revendications

1. Système constitué d'un appareil ménager (10) et d'un terminal mobile comprenant une caméra (24) intégrée, dans lequel l'appareil ménager (10) peut être relié au terminal mobile (20) pour une transmission de données et comprend une première commande (1) de type calculateur destinée à commander des cycles de fonctionnement de l'appareil ménager (10),
dans lequel la première commande de type calculateur (1) est dotée d'une première partie de mémoire (2) comprenant des programmes séquentiels lisibles et d'une seconde partie de mémoire (3) et est conçue de manière à ce que des cycles de fonctionnement exécutés soient enregistrés en continu, concernant des paramètres définis, dans la seconde partie de mémoire (3),
dans lequel le terminal mobile (20) est relié à la commande de type calculateur (1) de l'appareil ménager (10) par une interface (15), notamment sans fil,
dans lequel il est prévu en outre que le terminal mobile (20) comprend une deuxième commande de type calculateur (4) comprenant une troisième partie de mémoire (5) pour une séquence d'analyse automatique de salissure,
dans lequel une séquence déclenchée volontairement, notamment par un utilisateur sur le terminal mobile (20) après un encrassement de l'appareil ménager détectable par la caméra est destinée à analyser les paramètres définis et mémorisés dans la seconde partie de mémoire (3) de la première commande de type calculateur (1) de l'appareil ménager (10), conjointement avec le résultat de la détection de la salissure, et,
par l'intermédiaire du terminal mobile (20), qui est conçu pour la réception d'une liaison, notamment d'une liaison radio (27_1) avec un serveur (6) d'un fournisseur de service, une base de données (7) du serveur (6) peut être consultée, de sorte qu'une information concernant l'enlèvement de l'encrassement détecté de l'appareil ménager peut être affichée (21) sur le terminal mobile pour des encrassements détectés de l'appareil ménager (10).

2. Système selon la revendication 1, dans lequel une liaison WLAN à un routeur dans l'immeuble de l'appareil ménager (10) peut être reçue par le terminal mobile (20), afin de rendre accessible le serveur (6) du fournisseur de service dans Internet (40).

3. Système selon la revendication 1, dans lequel une liaison au serveur (6) du fournisseur de service peut être reçue par le terminal mobile (20) via un réseau de radiocommunication d'un opérateur de téléphonie mobile sur la base d'un des réseaux UMTS ou LTE/3G.

4. Système selon l'une des revendications 1 à 3, dans lequel, dans une séquence déclenchée volontairement sur l'appareil mobile (20) concernant l'appareil ménager (10), des paramètres de la seconde partie de mémoire (3) aussi bien que des données qui concernent la représentation d'un encrassement de l'appareil ménager peuvent être mis en relation avec des données associables de la base de données (7) du serveur (6) qui sont enregistrées concernant l'appareil ménager, au moyen de la seconde commande de type calculateur (4) du terminal mobile (20), afin de pouvoir générer ou indiquer, notamment visuellement (21) une information pour un enlèvement de l'encrassement détecté.

5. Système selon l'une des revendications précédentes, dans lequel le terminal mobile (20) est conçu de telle manière qu'il peut charger dans sa troisième partie de mémoire (5) des nouveaux programmes d'analyse d'encrassement, tels que des applications, pour un appareil ménager déterminé, en accédant à un site Internet.

6. Système selon la revendication 5, dans lequel le terminal mobile (20) est conçu de telle manière qu'avec des programmes d'analyse d'encrassement nouvellement chargés, il peut être initié que d'autres paramètres soient mémorisés dans la seconde partie de mémoire (3) de l'appareil ménager (10), de telle manière que le programme d'analyse d'encrassement nouvellement chargé, en relation avec une séquence d'analyse déclenchée volontairement, permette d'effectuer une analyse de meilleure qualité des encrassements détectés de l'appareil ménager (10).

7. Système selon l'une des revendications précédentes, dans lequel la caméra (24) du terminal mobile (20) est configurable pour un domaine de longueurs d'ondes étendu d'un rayonnement pour représenter les encrassements détectés.

8. Système selon la revendication 7, dans lequel un nouveau programme d'analyse d'encrassement est adaptable au domaine de longueurs d'ondes étendu d'un rayonnement pour représenter les encrassements détectables.

9. Système selon l'une des revendications précédentes, dans lequel des informations supplémentaires sur l'encrassement sont entrées via le terminal mobile.

10. Système selon l'une des revendications précédentes, dans lequel le type de l'appareil ménager peut être déterminé par une image de l'appareil ménager (10) pouvant être obtenue par la caméra (24) du terminal mobile ou une information sur l'appareil ménager peut être entrée par le terminal mobile.

11. Procédé de détermination d'une instruction de nettoyage pour un appareil ménager (10), dans lequel un appareil mobile (20) ayant une caméra intégrée (24) et un accès à une base de données (7) d'un serveur (6) dans Internet (40) sont prévus, dans lequel les étapes de traitement suivantes sont prévues :
- avec la caméra (24) du terminal mobile (20), un enregistrement d'un encrassement de l'appareil ménager est prise et des données numériques sont obtenues à partir de là,
- une commande (4) du terminal mobile envoie, en tenant compte des données numériques obtenues sur l'encrassement de l'appareil ménager, une requête à la base de données (7) du serveur (6) dans Internet (40), et
- la réponse de la requête au serveur (6) est affichée sur une partie d'affichage de la surface d'entrée (21) du terminal mobile (20) en tant qu'instruction de nettoyage, dans lequel des paramètres définis des cycles de fonctionnement antérieurs de l'appareil ménager (10) sont transmis par une commande (1) de l'appareil ménager (10) à une commande (4) du terminal mobile et la commande (4) du terminal mobile envoie la requête en tenant compte des données numériques obtenues sur l'encrassement de l'appareil ménager et des paramètres des cycles de fonctionnement antérieurs.

12. Procédé de détermination d'une instruction de nettoyage pour un appareil ménager (10) selon la revendication 11, dans lequel la commande (4) du terminal mobile (20) enregistre un programme d'analyse d'encrassement, au moyen duquel les étapes de traitement peuvent être exécutées.

13. Procédé selon la revendication 12, dans lequel un programme d'analyse d'encrassement peut être chargé, notamment sous une forme mise à jour, à partir d'Internet (40) dans la commande (4) de l'appareil mobile (20).
